# EUROPEAN PATENT SPECIFICATION

(11) **EP 0 383 211 B1**
(45) Date of publication and mention of the grant of the patent: **19.10.1994**
(21) Application number: 90102609.6
(22) Date of filing: 09.02.1990
(51) Int. Cl.: B60R 11/02

(54) **Automotive seating system featuring a television set**
Fahrzeugsitzanordnung mit Fernseher
Système de siège pour automobile avec poste de télévision

(30) Priority: 17.02.1989 IT 5288289 U
(43) Date of publication of application: 22.08.1990
(73) Proprietor: FIAT AUTO S.p.A., 10135 Torino (IT)
(72) Inventor: Vottero-Fin, Alberto, I-12049 Trinita (IT); Prato, Luigi, I-10090 Villarbasse (IT)
(74) Representative: Jorio, Paolo

(56) References cited:
- EP-A- 0 234 699
- DE-A- 2 628 216
- DE-A- 3 530 654
- BOSCH TECHNISCHE BERICHTE. vol. 8, no. 1-2, 1986, Osch, Stuttgart DE pages 102- 106; Klaus Doerffer: "InCarVideo"
- PATENT ABSTRACTS OF JAPAN vol. 7, no. 244 (M-252)(1389) 28 October 1983,& JP-A-58 128942

## Description

The present invention relates to an automotive seating system housed inside the passenger compartment and featuring a television set operatable from inside the vehicle, for the entertainment in particular of the rear seat passengers.

Known automotive television sets usually consist of portable mini sets secured by various means to some point inside the passenger compartment, e.g. to the seating system consisting of the front seats and rear bench seat. For instance EP-A-0 234 699 shows a television set enclosed in the rear part of an armrest of the front seats. The use of television sets secured to the seats or other members inside the passenger compartment of the vehicle poses a number of problems and, in view of the size of the equipment involved, is rarely feasible on moving vehicles, with the exception of those other than cars, e.g. vans or similar. To overcome the aforementioned drawbacks, Japanese Patent n.58.128942 provides for a mini set built into the back of the headrest on one of the front seats. Such a solution, however, fails to provide for all-round viewing comfort, on account of the lateral location of the set and the extremely small size of the same for enabling it to be accommodated inside the headrest. Moreover, in the event of a head-on crash, severe facial injuries may be caused by the passenger seated directly in front of the set being hurled against the screen.

The aim of the present invention is to provide a seating system, particularly an automotive seating system, designed to effectively accommodate a television set and involving no danger to passengers.

With this aim in view, according to the present invention, there is provided an automotive seating system as defined in claim 1.

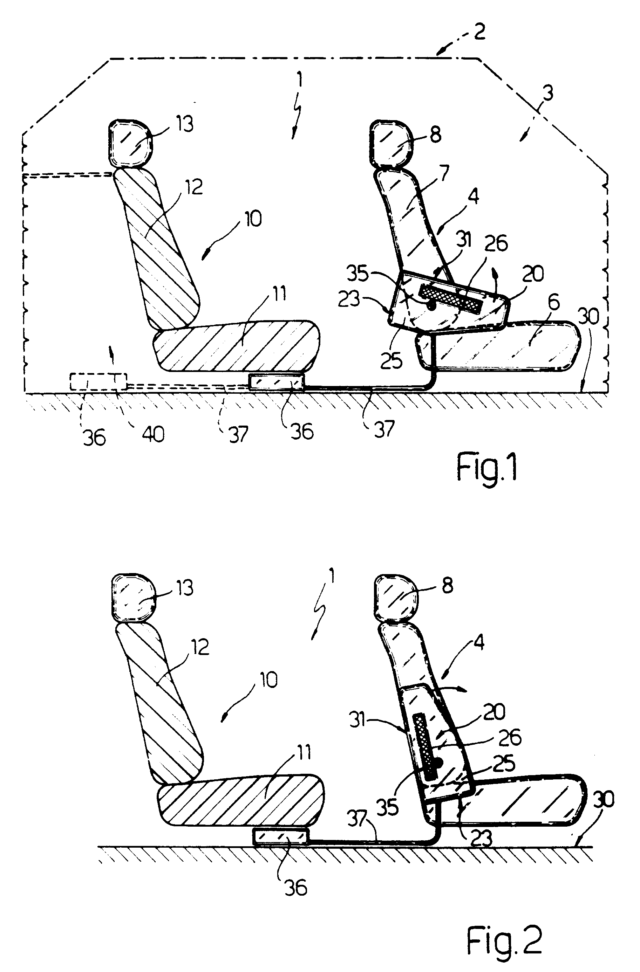

A non-limiting embodiment of the present invention will be described by way of example with reference to the accompanying drawings, in which:
Fig.s 1 and 2 show side views of the seating system according to the present invention in two operating positions;
Fig.s 3 and 4 show a front and bottom plan view respectively of the Fig. 1 and 2 system.

Number 1 in the accompanying drawings indicates a seating system for a vehicle 2 (shown by the dotted line in Fig.1) of any known type, e.g. a car. Said seating system 1 is housed inside the passenger compartment 3 of vehicle 2, and comprises two known, separate, side by side, front seats 4 and 5, each comprising a seat portion 6 and backrest 7, possibly fitted with a headrest 8; and at least a rear seat 10, in the example shown, a known type of bench seat, also comprising a seat portion 11 and backrest 12, possibly fitted with a headrest 13. In the case of long wheel base vehicles 2, such as limousines or similar, seating system 1 may comprise further known types of rear side seats or jump seats (not shown).

According to the present invention, seating system 1 also comprises a lift-up armrest 20 located between front seats 4 and 5; and a known type of television set 21 of appropriate size built permanently into armrest 20, so that the front side of rear wall 23 of armrest 20 is defined partly by a screen 22 and partly by a panel 24 controlling set 21. In particular, armrest 20 comprises set 21, and a padded housing 25 designed to accommodate and the open rear end of which is closed off by the front portion of set 21, i.e. screen 22, and control panel 24. For cooling set 21, housing 25 presents, preferably on both sides, a lateral ventilating grill 26.

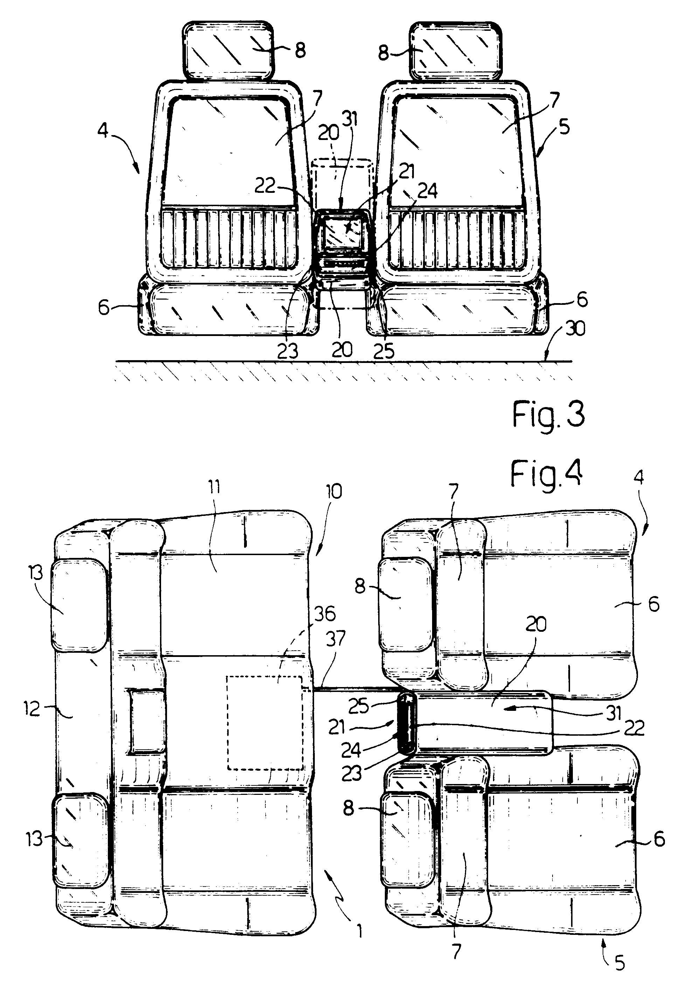

Armrest 20 is supported between front seats 4 and 5 so as to swing between an idle position (as shown in Fig.2 and by the dotted line in Fig.3) wherein it is arranged substantially parallel to and to the side of backrests 7, with screen 22 facing the floor 30 of vehicle 2, and an operating position (Fig.s 1, 3 and 4) wherein screen 22 is arranged facing rear seat 10, and the upper supporting surface 31 is arranged between and substantially parallel to respective seat portions 6, so as to act as an armrest for the front occupants of vehicle 2. To enable troublefree viewing of set 21 from rear seat 10, armrest 20 is so designed that, in the operating position, screen 22 faces slightly upwards. In the example shown, this is achieved by pivoting armrest 20 about point 35 so that, in the operating position, it is arranged slightly obliquely in relation to floor 30.

Seating system 1 as described above may also comprise a video tape reader/recorder 36 of any known type connected to set 21, e.g. by cable 37, and located next to rear seat 10, e.g. underneath seat portion 11. According to a variation not shown, video tape reader/recorder 36 may also be built into seat portion 11, for enabling direct loading/control by the rear seat passengers from inside compartment 3. According to a further variation (shown by the dotted line in Fig.1), video tape reader/recorder 36 is simply housed inside the luggage compartment 40 of vehicle 2 and set up, e.g. by the driver, before setting off on long journeys. In this case, control panel 24 may also provide for controlling video tape recorder 36, thus enabling direct en route control by the rear seat passengers.

The advantages of the present invention will be clear from the foregoing description. Firstly, in the idle position, set 21 is arranged with the screen facing downwards, thus eliminating any possibility of accidental impact by the rear passengers, and in no way affecting normal operation of armrest 20. Secondly, the relatively large size of armrest 20 enables the use of a fairly large screen 22 thus providing for improved viewing comfort. Thirdly, the overall design of seating system 1 is extremely straightforward, efficient and compact. And lastly, the central location of screen 22 provides for all-round viewing comfort with no risk to passengers (e.g. facial injuries) in the event of a collision, by virtue of set 21 being built into armrest 20 and therefore safely protected between front seats 4 and 5.

## Claims

1. An automotive seating system (1) comprising two side by side front seats (4,5) with an armrest (20) in between, at least a rear seat (10), a television set (21) built permanently inside said armrest (20) so that the television screen (22) defines at least part of the front side of the rear wall (23) of said armrest (20); characterised by the fact that said armrest (20) is supported between said two front seats (4,5) so as to swing between an idle position, wherein it is arranged substantially parallel to and to the side of the respective seatbacks (7) of said front seats (4,5), with said screen (22) facing the floor (30) of the vehicle (2), and an operating position wherein said armrest (20) is arranged with said screen (22) facing said rear seat (10), and with its upper surface (31) arranged between the respective seat portions (6) of said front seats (4,5).

2. A seating system as claimed in Claim 1, characterised by the fact that said front side of said rear wall (23) of said armrest (20) is defined partly by said screen (22) and partly by the control panel (24) of said television set (21).

3. A seating system as claimed in Claim 1 or 2, characterised by the fact that said armrest (20) comprises a padded housing (25) designed to accomodate and the open rear end of which is closed off by said television set (21); said housing (25) being provided laterally with at least a ventilation grill (26).

4. A seating system as claimed in Claim 1, characterised by the fact that, with said armrest (20) in said operating position, said screen (22) faces slightly upwards to enable troublefree viewing from said rear seat (12).

5. A seating system (1) as claimed in any one of the foregoing Claims, characterised by the fact that it also comprises a video taper reader/recorder (36) connected to said television set (21) and located close to said rear seat (12).

## Patentansprüche

1. Fahrzeugsitzanordnung (1) mit zwei Seite an Seite angeordneten Vordersitzen (4, 5) und einer Armlehne (20) dazwischen, wenigstens einem Rücksitz (10), mit einer permanent in die Armlehne (20) eingebauten Fernsehanlage (21), so daß der Fernsehschirm (22) wenigstens einen Teil der Vorderseite der Rückenwand (23) der Armlehne (20) definiert; gekennzeichnet durch die Tatsache, daß die Armlehne (20) zwischen den zwei Vordersitzen (4, 5) abgestützt ist, so daß sie zwischen einer Ruhestellung, in der sie im wesentlichen parallel zu der Seit der entsprechenden Sitzrücken (7) der Vordersitze (4, 5) angeordnet ist, wobei der Schirm (22) gegen den Boden (30) des Fahrzeuges (2) gerichtet ist, in eine Betriebsstellung schwingen kann, wobei die Armlehne (20) mit dem Schirm (22) so angeordnet ist, daß er dem Rücksitz (10) gegenüberliegt und wobei ihre Oberfläche (31) zwischen den entsprechenden Sitzteilen (6) der Vordersitze (4, 5) angeordnet ist.

2. Sitzanordnung nach Anspruh 1, gekennzeichnet durch die Tatsache, daß die Vorderseite der Rückenwand (23) der Armlehne (20) teilweise durch den Schirm (22) und teilweise durch die Steuerkonsole (24) der Fernsehanlage (21) vorgegeben wird.

3. Sitzanordnung nach Anspruch 1 oder 2, gekennzeichnet durch die Tatsache, daß die Armlehne (20) ein gepolstertes Gehäuse (24) umfaßt, das so entworfen ist, daß es das offene hintere Ende, das durch die Fernsehanlage (21) abgeschlossen ist, aufnehmen kann; wobei das Gehäuse (25) seitlich mit wenigstens einem Ventilationsgitter (26) versehen ist.

4. Sitzanordnung nach Anspruch 1, gekennzeichnet durch die Tatsache, daß die Armlehne (20) in der Betriebsstellung des Schirmes (22) leicht aufwärts gerichtet ist, um ein störungsfreies Betrachten von dem Rücksitz (12) zu ermöglichen.

5. Sitzanordnung (1) nach irgendeinem der vorangehenden Ansprüche, gekennzeichnet durch die Tatsache, daß sie ferner eine Videoband-Aufzeichnungs/Wiedergabevorrichtung (36) aufweist, die an die Fernsehanlage (21) angeschlossen ist und nahe an dem Rücksitz (12) angeordnet ist.

## Revendications

1. Système de sièges d'automobile (1) comprenant deux sièges avant (4,5) disposés côte-à-côte et entre lesquels est disposé un appui-bras (20), au moins un siège arrière (10), un récepteur de télévision (21) monté à demeure à l'intérieur dudit appui-bras (20), de sorte que l'écran de télévision (22) définit au moins une partie de la face avant de la paroi arrière (23) dudit appui-bras (20); caractérisé en ce que ledit appui-bras (20) est supporté entre lesdits deux sièges avant (4,5) de manière à pivoter entre une position de repos, dans laquelle il est sensiblement parallèle au côté des dossiers respectifs (7) desdits sièges avant (4,5), ledit écran (22) étant tourné vers le plancher (30) du véhicule (2), et une position de fonctionnement, dans laquelle ledit appui-bras (20) est disposé de telle sorte que ledit écran (22) est tourné vers ledit siège arrière (10), tandis que sa surface supérieure (31) est située entre lesdites parties respectives (6) desdits sièges avant (4,5).

2. Système de sièges selon la revendication 1, caractérisé en ce que ladite face avant de ladite paroi arrière (23) dudit appui-bras (20) est défini en partie par ledit écran (22) et en partie par le panneau de commande (24) dudit récepteur de télévision (21).

3. Système de sièges selon la revendication 1 ou 2, caractérisé en ce que ledit appui-bras (20) comprend un boîtier rembourré (25) conçu de manière à loger ledit récepteur de télévision (21) et dont l'extrémité arrière ouverte est fermée par ledit récepteur de télévision; ledit boîtier (25) comportant latéralement au moins une grille de ventilation (26).

4. Système de sièges selon la revendication 1, caractérisé en ce que, lorsque ledit appui-bras (20) est dans ladite position de fonctionnement, ledit écran (22) est tourné légèrement vers le haut de manière à permettre une observation parfaite à partir dudit siège arrière (12).

5. Système de sièges (1) selon l'une quelconque des revendications précédentes, caractérisé en ce qu'il comporte également un lecteur/enregistreur de bande vidéo (36) raccordé audit récepteur de télévision (21) et situé à proximité dudit siège arrière (12).
